# EUROPEAN PATENT SPECIFICATION

(11) **EP 1 527 906 B1**
(45) Date of publication and mention of the grant of the patent: **24.02.2010**
(21) Application number: 04025539.0
(22) Date of filing: 27.10.2004
(51) Int. Cl.: B60B 33/02

(54) **Castor**
Rolle
Roulette

(30) Priority: 28.10.2003 GB 0325063
(43) Date of publication of application: 04.05.2005
(73) Proprietor: Colson Castors Limited, Hill Top, West Bromwich, West Midlands B70 0UA (GB)
(72) Inventor: Taylor, Christopher Johnathan Colson Castors Ltd., West Bromwich West Midlands, B70 0UA (GB)
(74) Representative: Wardley, Diana Mary

(56) References cited:
- DE-A1- 19 516 586
- GB-A- 2 204 485
- US-A- 4 722 114
- US-A- 4 941 552
- US-A- 5 014 391

## Description

This invention relates to a castor. Castors in accordance with the present invention are intended particularly, but not exclusively, for use on beds, patient trolleys and the like for hospitals and other premises.

It is conventional practice for a bed for use in hospitals or the like to be provided with four castors, one at each corner of the bed. Such castors may each have one, preferably two, ground-engaging castor wheels rotatable about an axis which in use is generally horizontal. The wheel or wheels are carried by a support structure which is swivelable relative to its connection to the bed, about a swivel axis which, in use, is generally vertical, and which is off-set from the horizontal axis about which the wheel or wheels can rotate.

A castor for a hospital bed or the like is required to be able to have its wheel(s) braked to at least resist, or preferably completely prevent, rotation. It is also a requirement that it should be able to be prevented from swivelling about its swivel axis, and such braking of its wheel(s) and prevention of swivelling may be required to be effected together, a condition usually, and herein, called "total lock".

There is also so-called "direction lock" where the castor wheel(s) are locked in a particular orientation, usually longitudinally of the bed, against swivelling. This enables the bed to be pushed or pulled in fore and aft directions.

It is important for castors which are used on hospital beds to act in combination with each other, so that at least three, preferably four, castors are totally locked at the same time. Only one castor may required to be direction locked. In special cases, however, only two castors may be lockable. The simultaneous locking of at least two castors is conventionally achieved by means of a system of connected bars built into the bed structure, each of which pass through a recess in a part of the castor at its connection to a respective corner of the bed. The bar engages a cam within the castor. Actuation of the cam effects braking of the castor wheel(s) and swivel locking, or direction locking as required.

In conventional designs of such castors, it has been usual, when the cam has been actuated so as to cause total locking of the castor, for the first part of the cam movement to be used to operate the means which locks the castor against swivelling. Only when this has taken place does the wheel brake begin to be applied, and only when the wheel brake is fully applied is the swivel locking means fully effective. This has disadvantages in that if either one of the wheel brake or the swivel locking means begins to wear it can interfere with the effectiveness of the other and thus the whole performance of the castor is degraded. Also, the amount of cam movement available to operate the wheel brake is limited, potentially limiting the effectiveness of the wheel brake even if all is in good order and correctly adjusted.

US 5014391 discloses a castor which has both a wheel brake and a swivel-lock, configured in such a way as to allow the operation of the brake to take place largely unaffected by the operation of the swivel locking means. The locking mechanism of the castor includes a stop disk and a locking disk, located co-axially one above the other. A first stage of swivel locking can be achieved on depression of the locking bolt by which the mechanism is actuated, so as to lock the wheel in one of two preset orientations, facing either directly forward or directly backward. Further depression of the bolt, in the same direction, engages a second stage of swivel locking, independent of the orientation of the wheel, and when depressed further still, the wheel brake is applied. However, locking of the mechanism can be effected by moving the bolt in one direction only, the degree of locking achieved depending on the extent of the movement of the bolt.

It is broadly the object of the present invention to address these disadvantages of known castors.

According to the invention there is provided a castor, including:
at least one castor wheel mounted on a support member for rotation about a wheel axis;
a connection member for connection of the castor to a body, the support member being connected to the connection member for swivelling movement about a swivel axis which is substantially perpendicular to the wheel axis and off-set therefrom;
braking means for inhibiting rotation of the at least one wheel relative to the support member;
holding means for holding the support member relative to the connection member against swivelling therebetween;
actuating means having an actuating member moveable from a starting position to cause the braking means and the holding means to be brought into operation;
the holding means including a holding member moveable into engagement with a holding element, the holding member being displaceable relative to the actuating member in the course of the movement of the actuating member, so substantially all the movement of the actuating member is usable to operate the braking means and is unaffected by engagement of the holding member with the holding element; and a further holding member moveable into engagement with the holding element in response to movement of the actuating member from the starting position without operating the braking means;
characterised in that the actuating member is moveable from the starting position in a first direction to cause the holding member to be moved into engagement with the holding element and to operate the braking means, and the further holding member is moveable into engagement with the holding element in response to movement of the actuating member from the starting position in a second, opposite, direction,
and in that the actuating member extends through an aperture in the holding element; and
the holding members have peripheral teeth engageable with complementary formations spaced circumferentially around the aperture wall to prevent swivelling.

The holding member may be spring biased, relative to the actuating member, towards a position of engagement with the holding element.

The further holding member may be engageable with the holding element in two positions spaced 180° from one another in the range of swivel movement of the support member relative to the connection member, for effecting direction locking of the castor. Thus, when the castor is direction locked the castor wheel(s) are aligned in one of two directions, usually the fore or aft directions corresponding to a length-wise direction of a bed or the like.

When the actuating member has been moved in the second direction, it may be necessary to swivel the support member relative to the connection member so as the align the further holding member with the first receiving formation. Thus "direction lock" is achieved.

The holding members may be rotationally fast with the actuating member and connecting member, and the holding element may be rotationally fast, about the swivel axis, with the support member.

The braking means may include a braking member connected to the support member for movement relative thereto and engageable with a part of the actuating member.

The braking member may be pivotally connected to the support member and engageable with an internal peripheral surface of the castor wheel(s), the actuating member engaging a part of the braking member remote from its pivotal connection to the support member to cause operation of the braking member.

The braking member may be biased away from engagement with the castor wheel(s) by a spring.

The spring may bias the braking member into engagement with an underside of the further holding member. Therefore, movement of the actuating member in the first direction can cause pivoting of the braking member about its pivotal connection to the support member, thus engaging the braking member with the wheel(s). The braking member may cooperate with an internal braking surface of the wheel(s).

The actuating means may include a cam engageable with the actuating member to effect movement thereof, the cam being angularly movable about a cam axis transverse to the swivel axis.

An embodiment of the invention will now be described with reference to the accompanying drawings, in which:

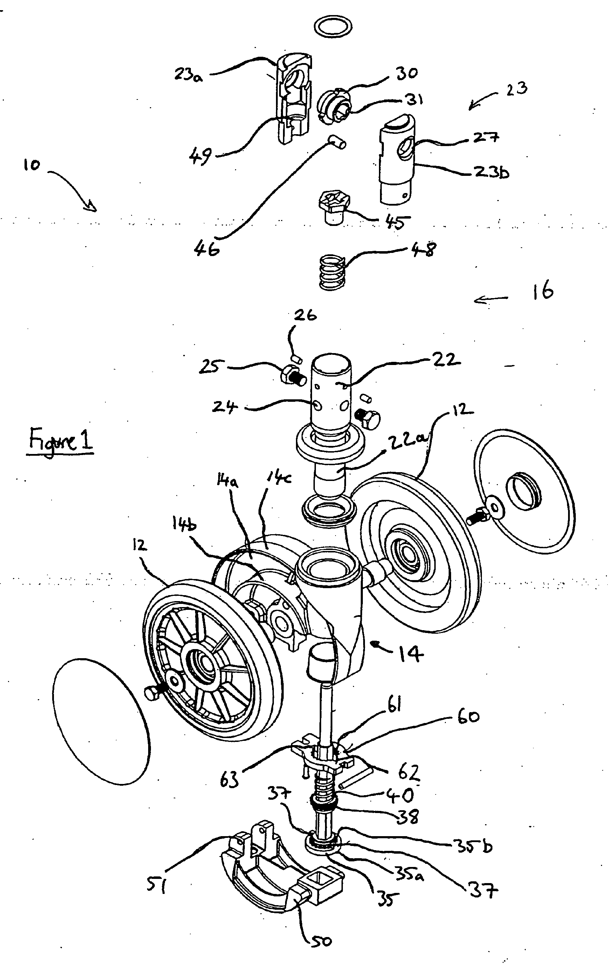

Figure 1 is an exploded perspective view from one side and above of a castor in accordance with the invention;
Figure 2 is a partly sectioned side view of part of the castor in accordance with the invention in a first operative condition;
Figure 3 is a view of the castor as Figure 2, in a further operative condition;
Figure 4 is a view of the castor as Figure 2, in a yet further operative condition; and

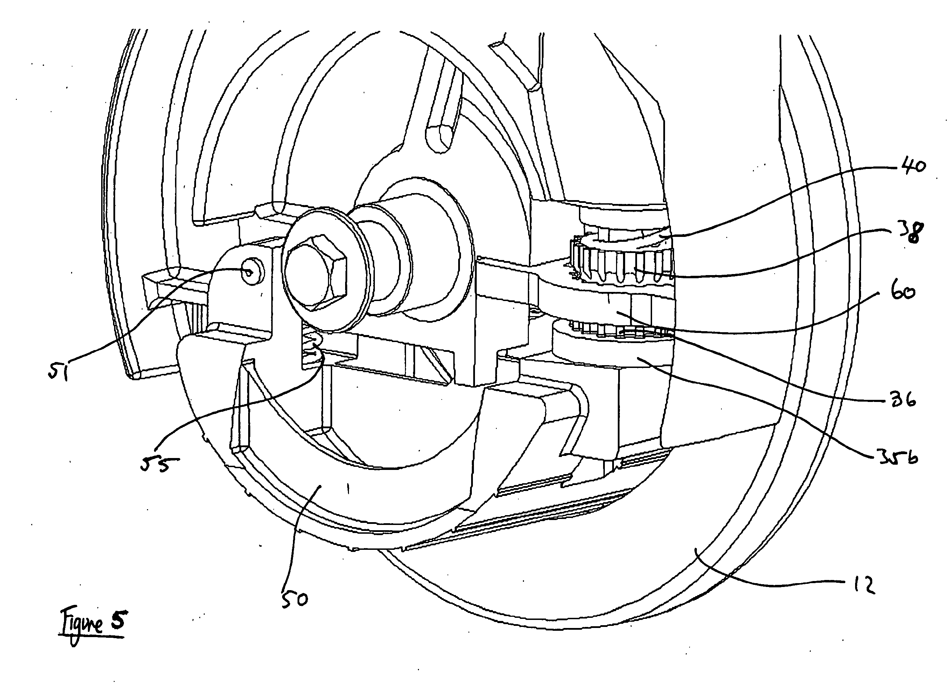

Figure 5 a perspective view of part of the castor in the first operative condition.

Referring to the Figures a castor in accordance with the present invention is shown generally at 10. The castor 10 has a pair of castor wheels 12 mounted on a support member 14, with suitable bearings, for rotation relative thereto, and a connection member 16 connected to the support member 14 for facilitating connection of the castor 10 to a body, such as, for example, a bed for use in hospitals and the like.

The support member 14 has a central web 14a which is substantially semi-circular when viewed from a side and has part circular strengthening walls 14b, 14c which extend laterally away from the web 14a on opposite sides thereof. The support member 14 has an axle 18, which extends through an aperture 19 in the web 14a to support the wheels 12, the axle 18 being substantially perpendicular to web 14a. Connected to the web 14a at a position offset from the axle 18 is a portion 20 of the support member 14. The portion 20 has an aperture 21 therethrough which is substantially perpendicular to and offset from a longitudinal axis of the axle 18, and is substantially parallel to the web 14a. The portion 20 and the aperture 21 therein facilitate connection of the support member 14 to the connection member 16.

The connection member 16 has a first part 22 and a second part 23 connectable to each other by rivets. A lower portion 22a of the first part 22 extends into the aperture 21 of the portion 20 and is supported therein by suitable bearings for swivelling movement about a swivel axis. An upper part of the first part 22 has a plurality of threaded apertures 24 to facilitate connection thereof, using threaded fasteners 25, in a tubular support leg of, for example, a hospital bed.

The second part 23 extends into a bore in an upper portion of the first part and is fixed therein by rivets 26. The second part 23 has two sections 23a, b which are symmetrical about a plane substantially parallel to the swivel axis. Supported between the sections 23a, b is a cam 30, for rotation about a cam axis, a cam follower 45, a bearing roller 46 and a spring 48. The cam 30 has a non-cylindrical aperture 31 therethrough, which in this example is hexagonal, which is aligned with apertures 27 in the sections 23a, b. The aperture 31 in the cam 30 is shaped so as to receive a standard connecting bar of a hospital bed structure.

The cam follower 45 has a recess to receive the bearing roller 46 such that it can rotate about an axis substantially parallel to the cam axis, such that engagement between a cam surface of the cam 30 effects movement of the cam follower 45 away from the cam 30.

The spring 48 is provided between the cam follower 45 and an internal shoulder 49 in each section 23a, b so as to bias the cam follower 45 into engagement with the cam surface of cam 30 at all times.

Provided within the part 22 and extending at an upper end into the part 23 and at a lower end through the portion 20 and into a space adjacent the web 14a is an actuating member 32. A substantial length of the actuating member 32 has a hexagonal cross-section, starting from a lower end thereof. The hexagonal part of the actuating member extends through a hexagonal aperture in part 22 of the connection member so that the actuating member cannot rotate about the swivel axis relative to the connection member. An upper end of the actuating member 32 is connected to the cam follower 45, such that movement of the cam follower as a result of rotation of the cam 30 effects linear movement of the actuating member 32 along its longitudinal axis (which is also the swivel axis of the castor).

A holding member 38 is provided on the actuating member 32 and has a hexagonal aperture therethrough to receive the actuating member 32. Thus the holding member 38 is slidable along the actuation member 32, but is not free to rotate therearound.

The holding member 38 has a plurality of teeth spaced around its circumference. Edge portions of the teeth are substantially parallel to the axis of the actuating member 32.

The holding member 38 is biased towards the lower end part of actuating member 32 by a spring 40, which spring 40 engages an upper surface of the holding member 38 and a shoulder within the part 22.

Connected to the lower end of the actuating member 32 is a further holding member 35. The holding member 35 is fixed relative to the actuating member 32. The holding member 35 has a circular plate part 35a at a lowermost end of the actuating member 32 and a toothed part 35b adjacent thereto, both coaxial with the axis of the actuating member 32.

The toothed part 35b has a plurality of circumferentially spaced teeth 36 and a pair of lugs 37, which lugs are provided between adjacent teeth 36 opposite each other (i.e. at 180° and 360° rotational positions).

The castor 10 is also provided with braking means comprising a braking member in the form of a brake shoe 50 which is pivotally connected at 51 to the web 14a of the support member 14. The pivotal connection 51 has an axis substantially parallel with the wheel axis and is positioned near the axle 18 at a side opposite the portion 20.

The brake shoe 50 is substantially C-shaped when viewed from the side, with one end of the C-shaped section connected at the pivotal connection 51 and an opposite end engageable with a lower surface of the further holding member 35. The brake shoe 50 is biased to a position in which it engages the lower surface of the further holding member 35 by a spring 55.

A substantially arcuate braking surface of the brake shoe 50 is engageable with a co-operating internal circumferential wall of each castor wheel 12 so as to inhibit rotation of the wheels 12 relative to the support member 14, when they are engaged.

The support member 14 also includes a holding plate element 60. The holding plate 60 is positioned in line with the actuating member 32 towards the lower end thereof and is connected to a part of the web 14a and to an opposite part of the portion 20. A plane of the holding plate 60 is substantially perpendicular to the axis of the actuating member 32.

The holding plate 60 has an aperture 61, through which the actuating member 32 extends. A circumferential wall of the aperture 61 is provided with a plurality of circumferentially spaced teeth 62. The teeth 62 are shaped so as to be engageable with the teeth of the holding member 38, or further holding member 35. The aperture is also provided with a pair of opposing outwardly extending recesses 63. The recesses 63 are positioned so as to correspond to the lugs 37 on the further holding member 35.

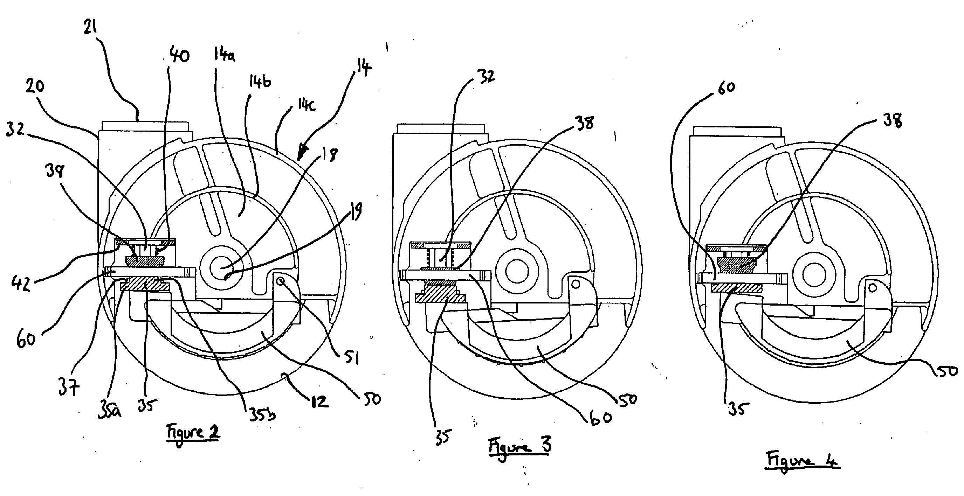

The castor is shown in Figure 2 in a first operative condition, which is a starting or neutral position. Figure 3 shows the castor in a "total lock" operative condition. To effect "total lock" of the castor 10, the cam 30 is rotated by the connecting bar (not shown) such that the cam follower 45 effects movement of the actuation member 32 in a direction away from the cam 30. The lower surface of the further holding member 35 pushes the brake shoe 50, such that the braking wall thereof engages the wheels 12, thus braking the wheels.

At the same time as the brake shoe 50 is engaging the wheels 12, the toothed part of the holding member 38 enters the aperture 61, but only if the teeth 62 and the circumferential teeth on the holding member 38 are correctly aligned. When the teeth of the holding member 38 and the teeth 62 are engaged, the support member 14 cannot swivel relative to the connection members 16.

However, if the teeth 62 and the teeth of the holding member 38 are not aligned initially the actuation of the brake shoe is not compromised. The spring 40 is simply compressed and when the support member 14 is swivelled slightly relative to the connection member 16 the teeth will align and the spring 40 will force the holding member 38 into the aperture 61. Therefore "total lock" of the castor assembly 10 is achieved. By way of example, the holding member 38 and the holding plate 60 may each be provided with 18 teeth, so a maximum swivel movement of nearly 20° would be required before the teeth can engage to prevent further swivelling.

To return the castor to its starting position the cam 30 is rotated in an opposite direction. The spring 48 forces the actuating member 32 towards the cam 30, which disengages both the brake shoe 50 from the wheels 12 and the holding member 38 from the aperture 61. The castor 10 is thus free to swivel and the wheels 12 are free to rotate.

To effect "direction lock" the cam 30 is rotated further beyond its starting position, such that the spring 48 effects movement of the actuation member 32 towards the cam 30 (shown in Figure 4). This raises the further holding member 35 towards the holding plate 60. If the lugs 37 and the recesses 63 are aligned the further holding member 35 will engage the aperture 61, thus locking the castor in substantially the fore or aft direction.

However, if the lugs 37 and the recesses 63 are not aligned the support member 14 must be swivelled relative to the connection member 16 until they align. Once they are aligned the spring 48 will force the actuating member 32 towards the cam 30 which will engage the teeth of the further holding member 35 with the teeth within the aperture 61.

To return the castor again to its starting position the cam 30 is rotated in an opposite direction. The cam 30 forces the actuating member 32 away from the cam 30, which disengages the further holding member 35 from the aperture 61. The castor 10 is thus free to swivel and the wheels 12 are free to rotate.

When locking of the castor against swivelling has been effected, in either the total locking or direction locking mode, it is the engagement of the teeth of either the holding member 38 or further holding member 35 with the teeth of the holding plate 61 which prevents swivelling of the castor. This locking effect is not dependent on the strength of the spring 48 or 40, but on sideways forces acting between the holding members and holding plate. Effective locking is achieved without requiring large forces to be exerted to urge holding members into engagement.

The components of the castor may be metal or plastics so long as they provide the desired properties.

In the present specification "comprises" means "includes or consists of" and "comprising" means "including or consisting of".

## Claims

1. A castor, including:
at least one castor wheel (12) mounted on a support member (14) for rotation about a wheel axis;
a connection member (16) for connection of the castor to a body, the support member (14) being connected to the connection member for swivelling movement about a swivel axis which is substantially perpendicular to the wheel axis and off-set therefrom;
braking means (50) for inhibiting rotation of the at least one wheel relative to the support member;
holding means (35,38,60) for holding the support member (14) relative to the connection member (16) against swivelling therebetween;
actuating means having an actuating member (32) moveable from a starting position to cause the braking means and the holding means to be brought into operation;
the holding means including a holding member (38) moveable into engagement with a holding element (60), the holding member (38) being displaceable relative to the actuating member (32) in the course of the movement of the actuating member (32), wherein the movement of the actuating member (32) is usable to operate the braking means (50) and is unaffected by engagement of the holding member (38) with the holding element (60); and a further holding member (35) moveable into engagement with the holding element (60) in response to movement of the actuating member (32) from the starting position without operating the braking means (50);
**characterised in that** the actuating member (32) is moveable from the starting position in a first direction to cause the holding member (38) to be moved into engagement with the holding element (60) and to operate the braking means (50), and the further holding member (35) is moveable into engagement with the holding element (60) in response to movement of the actuating member (32) from the starting position in a second, opposite, direction,
and **in that** the actuating member (32) extends through an aperture (61) in the holding element (60); and
the holding members (35,38) have peripheral teeth engageable with complementary formations (62) spaced circumferentially around the aperture wall (61) to prevent swivelling.

2. A castor according to claim 1 wherein the holding member (38) is spring biased relative to the actuating member (32) towards engagement with the holding element (60).

3. A castor according to claim 1 or claim 2 wherein the further holding member (35) is engageable with the holding element in two positions only, spaced 180° from each other in the range of swivelling movement of the castor.

4. A castor according to any one of claims 1 to 3 wherein the holding members (35,38) are rotationally fast with the actuating member (32) and connecting member and the holding element (60) is rotationally fast, about the swivel axis, with the support member (14).

5. A castor according to any one of the preceding claims wherein the braking means includes a braking member (50,51) moveably connected to the support member (14) and engageable by the actuating member (32) to cause it to engage the castor wheel or wheels (12).

6. A castor according to claim 5 wherein the braking member (50,51) is engageable with an internal peripheral surface of the castor wheel or wheels (12).

7. A castor according to claim 5 or claim 6 wherein the braking member (50,51) is pivotally connected to the support member (14) and engageable with an internal peripheral surface of the castor wheel or wheels (12), the actuating member (32) engaging a part of the braking member (50,51) remote from its pivotal connection to the support member (14) to cause operation of the braking member (50,51).

8. A castor according to any preceding claim wherein the actuating means includes a cam (30) engageable with the actuating member (32) to effect movement thereof, the cam (30) being angularly movable about a cam axis transverse to the swivel axis.

## Patentansprüche

1. Laufrolle, bestehend aus:
mindestens einem Laufrad (12), das an einem Stützglied (14) befestigt ist, um sich um eine Radachse drehen zu können;
einem Verbindungsglied (16) zum Verbinden der Laufrolle mit einem Gestell, wobei das Stützglied (14) mit dem Verbindungsglied verbunden ist, um eine Schwenkbewegung um eine Schwenkachse zu ermöglichen, welche im Wesentlichen senkrecht zur Radachse verläuft und gegenüber dieser versetzt ist;
Bremsmitteln (50) zum Hemmen der Drehung des mindestens einen Rads im Verhältnis zum Stützglied;
Haltemitteln (35, 38, 60) zum Festhalten des Stützglieds (14) im Verhältnis zum Verbindungsglied (16) gegen eine Schwenkung zwischen diesen;
Betätigungsmitteln mit einem Betätigungsglied (32), das bewegbar ist aus einer Ausgangsposition, um zu bewirken, dass die Bremsmittel und die Haltemittel betätigt werden;
wobei die Haltemittel ein Halteglied (38) enthalten, das bewegbar ist, um in Eingriff mit einem Halteelement (60) gebracht zu werden, wobei das Halteglied (38) im Verlauf der Bewegung des Betätigungsglieds (32) im Verhältnis zu dem Betätigungsglied (32) verschiebbar ist, wobei die Bewegung des Betätigungsglieds (32) verwendbar ist, um die Bremsmittel (50) zu betätigen und unbeeinflusst ist von dem Eingriff des Halteglieds (38) mit dem Halteelement (60); sowie ein weiteres Halteglied (35) enthalten, das bewegbar ist, um als Reaktion auf die Bewegung des Betätigungsglieds (32) aus der Ausgangsposition in Eingriff mit dem Halteelement (60) gebracht zu werden, ohne dabei die Bremsmittel (50) zu betätigen;
**dadurch gekennzeichnet, dass** das Betätigungsglied (32) aus der Ausgangsposition heraus in eine erste Richtung bewegbar ist, um zu bewirken, dass das Halteglied (38) so bewegt wird, dass es in Eingriff mit dem Halteelement (60) gebracht wird, und um die Bremsmittel (50) zu betätigen, und dass das weitere Halteglied (35) so bewegbar ist, dass es als Reaktion auf die Bewegung des Betätigungsglieds (32) aus der Ausgangsposition heraus in eine zweite, entgegengesetzte Richtung in Eingriff mit dem Haltelement (60) gebracht wird,
und **dadurch**, dass das Betätigungsglied (32) durch eine Öffnung (61) in dem Halteelement (60) verläuft; und
dass die Halteglieder (35, 38) peripherische Zähne aufweisen, die in dazu komplementäre Strukturen (62) eingreifen können, welche mit Abstand zueinander auf dem Umfang der Öffnungswand (61) angeordnet sind, um eine Schwenkung zu verhindern.

2. Laufrolle gemäß Anspruch 1, wobei das Halteglied (38) im Verhältnis zu dem Betätigungsglied (32) in Richtung des Eingriffs in das Halteelement (60) unter Federvorspannung steht.

3. Laufrolle gemäß Anspruch 1 oder Anspruch 2, wobei das weitere Halteglied (35) in lediglich zwei Positionen in Eingriff mit dem Halteelement gebracht werden kann, die einen Abstand von 180° zueinander im Schwenkbewegungsbereich der Laufrolle haben.

4. Laufrolle gemäß einem der Ansprüche 1 bis 3, wobei die Halteglieder (35, 38) drehfest mit dem Betätigungsglied (32) und dem Verbindungsglied sind und das Halteelement (60) drehfest, um die Schwenkachse, mit dem Stützglied (14) ist.

5. Laufrolle gemäß einem der vorherigen Ansprüche, wobei die Bremsmittel ein Bremsglied (50, 51) enthalten, das bewegbar mit dem Stützglied (14) verbunden ist und durch das Betätigungsglied (32) in Eingriff gebracht werden kann, um zu bewirken, dass es in das Laufrad bzw. die Laufräder (12) eingreift.

6. Laufrolle gemäß Anspruch 5, wobei das Bremsglied (50, 51) in Eingriff mit einer peripherischen Innenfläche des Laufrads bzw. der Laufräder (12) gebracht werden kann.

7. Laufrolle gemäß Anspruch 5 oder Anspruch 6, wobei das Bremsglied (50, 51) gelenkig mit dem Stützglied (14) verbunden ist und in Eingriff mit einer peripherischen Innenfläche des Laufrads bzw. der Laufräder (12) gebracht werden kann, wobei das Betätigungsglied (32) in Eingriff mit einem Abschnitt des Bremsglieds (50, 51) kommt, der sich entfernt von dessen Gelenkverbindung mit dem Stützglied (14) befindet, um die Betätigung des Bremsglieds (50,51) zu bewirken.

8. Laufrolle gemäß einem der vorherigen Ansprüche, wobei das Betätigungsglied einen Nocken (30) enthält, der in Eingriff mit dem Betätigungsglied (32) kommen kann, um dessen Bewegung zu bewirken, wobei der Nocken (30) winkelartig um eine Nockenachse bewegt werden kann, die quer zur Schwenkachse verläuft.

## Revendications

1. Un galet pivotant, comprenant :
au moins une roue pivotante (12) montée sur un élément support (14) pour une rotation autour d'un axe de roue,
un élément de raccordement (16) pour un raccordement du galet pivotant à une carrosserie, l'élément support (14) étant raccordé à l'élément de raccordement pour un mouvement de pivotement autour d'un axe de pivotement qui est sensiblement perpendiculaire à l'axe de roue et décalé par rapport à celui-ci,
un moyen de freinage (50) destiné à empêcher la rotation de la au moins une roue par rapport à l'élément support,
un moyen de maintien (35, 38, 60) destiné à maintenir l'élément support (14) par rapport à l'élément de raccordement (16) contre tout pivotement entre ces éléments,
un moyen d'actionnement possédant un élément d'actionnement (32) déplaçable d'une position de départ de façon à amener le moyen de freinage et le moyen de maintien à être mis en fonctionnement,
le moyen de maintien comprenant une pièce de maintien (38) déplaçable en prise avec un élément de maintien (60), la pièce de maintien (38) étant déplaçable par rapport à l'élément d'actionnement (32) au cours du mouvement de l'élément d'actionnement (32), où le mouvement de l'élément d'actionnement (32) est utilisable pour actionner le moyen de freinage (50) et n'est pas affecté par la prise de la pièce de maintien (38) avec l'élément de maintien (60), et une autre pièce de maintien (35) déplaçable en prise avec l'élément de maintien (60) en réponse à un déplacement de l'élément d'actionnement (32) à partir de la position de départ sans actionner le moyen de freinage (50),
**caractérisé en ce que** l'élément d'actionnement (32) est déplaçable d'une position de départ dans une première direction de façon à amener la pièce de maintien (38) à être placée en prise avec l'élément de maintien (60) et à actionner le moyen de freinage (50), et l'autre pièce de maintien (35) est déplaçable en prise avec l'élément de maintien (60) en réponse à un déplacement de l'élément d'actionnement (32) à partir de la position de départ dans une deuxième direction opposée,
et **en ce que** l'élément d'actionnement (32) s'étend au travers d'une d'ouverture (61) dans l'élément de maintien (60), et
les pièces de maintien (35, 38) possèdent des dents périphériques qui peuvent entrer en prise avec des formations complémentaires (62) espacées circonférentiellement autour de la paroi d'ouverture (61) de façon à empêcher tout pivotement.

2. Un galet pivotant selon la Revendication 1 où la pièce de maintien (38) est sollicitée par ressort par rapport à l'élément d'actionnement (32) vers une prise avec l'élément de maintien (60).

3. Un galet pivotant selon la Revendication 1 ou 2 où l'autre pièce de maintien (35) peut entrer en prise avec l'élément de maintien en deux positions uniquement, espacées de 180° l'une de l'autre dans la plage du mouvement de pivotement du galet pivotant.

4. Un galet pivotant selon l'une quelconque des Revendications 1 à 3 où les pièces de maintien (35, 38) sont bloquées en rotation par rapport à l'élément d'actionnement (32) et l'élément de raccordement, et l'élément de maintien (60) est bloqué en rotation, autour de l'axe de pivotement, par rapport à l'élément support (14).

5. Un galet pivotant selon l'une quelconque des Revendications précédentes où le moyen de freinage comprend un élément de freinage (50, 51) raccordé de manière déplaçable à l'élément support (14) et pouvant entrer en prise avec l'élément d'actionnement (32) de façon à l'amener à entrer en prise avec la ou les roue(s) pivotante(s) (12).

6. Un galet pivotant selon la Revendication 5 où l'élément de freinage (50, 51) peut entrer en prise avec une surface périphérique interne de la ou des roue(s) pivotante(s) (12).

7. Un galet pivotant selon la Revendication 5 ou 6 où l'élément de freinage (50, 51) est raccordé de manière pivotante à l'élément support (14) et peut entrer en prise avec une surface périphérique interne de la ou des roue(s) pivotante(s) (12), l'élément d'actionnement (32) entrant en prise avec une partie de l'élément de freinage (50, 51) à distance de son raccordement à pivot à l'élément support (14) de façon à amener l'actionnement de l'élément de freinage (50, 51).

8. Un galet pivotant selon l'une quelconque des Revendications précédentes où le moyen d'actionnement comprend une came (30) pouvant entrer en prise avec l'élément d'actionnement (32) de façon à obtenir le déplacement de celui-ci, la came (30) étant déplaçable angulairement autour d'un axe de came transversal à l'axe de pivotement.
